# FASCICULE DE BREVET EUROPEEN

(11) **EP 3 902 727 B1**
(45) Date de publication et mention de la délivrance du brevet: **11.12.2024**
(21) Numéro de dépôt: 19850762.6
(22) Date de dépôt: 18.12.2019
(51) Int. Cl.: B60T 13/74, F16D 51/22

(54) **MOTOREDUCTEUR POUR FREIN À TAMBOUR**
UNTERSETZUNGSMOTOR FÜR TROMMELBREMSE
REDUCTION MOTOR FOR DRUM BRAKE

(30) Priorité: 28.12.2018 FR 1874365
(43) Date de publication de la demande: 03.11.2021
(73) Titulaire: Hitachi Astemo France, 93700 Drancy (FR)
(72) Inventeur: MOLINARO, Alberto, 93160 NOISY LE GRAND (FR); GUIGNON, Cédric, 94510 LA QUEUE EN BRIE (FR); LUU, Gérard, 93160 NOISY LE GRAND (FR); DUPAS, Christophe, 44210 PORNIC (FR); QUAZUGUEL, Gaëtan, 93500 PANTIN (FR)
(74) Mandataire: Brevalex
(86) Numéro de dépôt international: PCT/FR2019/053158
(87) Numéro de publication internationale: WO 2020/136325

(56) Documents cités:
- EP-A1- 0 632 213
- WO-A1-2018/148245
- FR-A1- 2 400 793
- FR-A1- 3 016 011
- KR-A- 20110 011 038

## Description

### DOMAINE TECHNIQUE ET ÉTAT DE LA TECHNIQUE ANTÉRIEURE

La présente invention se rapporte au domaine des freins de véhicule automobile, et plus spécifiquement à un ensemble motoréducteur pour actionner les segments d'un frein à tambour.

Dans l'industrie automobile, le freinage de stationnement électromécanique a pour fonction d'immobiliser le véhicule à l'arrêt afin de l'empêcher de bouger de façon inopinée. Il satisfait en outre à la disposition légale exigeant un deuxième système de freinage indépendant du système de freinage de service, généralement hydraulique, dans le véhicule et remplit d'autres fonctions de confort et de sécurité, notamment de par son aptitude à l'autodiagnostic.

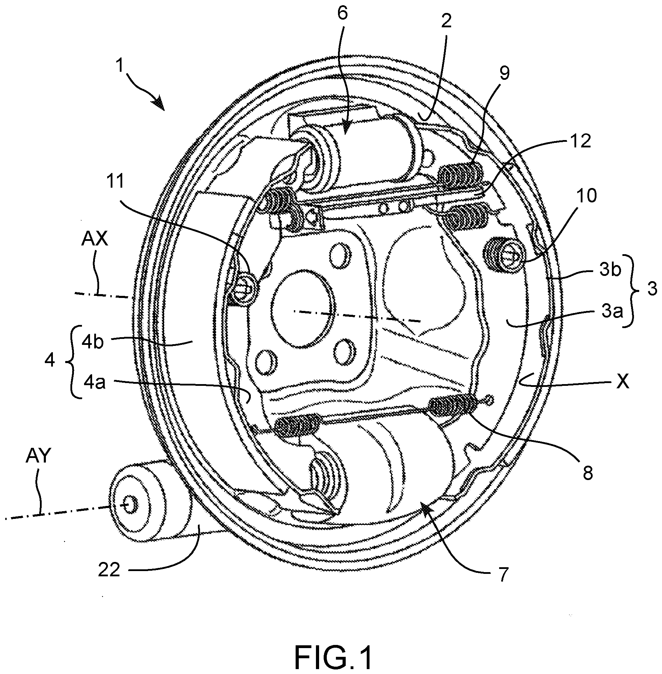

Il est connu du document FR3016015 d'implanter au sein d'un frein à tambour, un actionneur mécanique en plus de l'actionneur hydraulique prévu initialement. Un tel frein à tambour, repéré par 1 sur la figure 1, comporte un plateau 2 de révolution d'axe AX équipé d premier et second segments en arc de cercles 3 et 4 mobiles radialement pour pouvoir être pressés contre la face interne cylindrique d'un tambour non représenté.

Les segments 3 et 4 comportent chacun une âme 3a, 4a en tôle plane en forme de portion de couronne circulaire qui porte une garniture de freinage 3b, 4b, et sont montés diamétralement opposés avec leurs extrémités en appui à fois sur un cylindre de roue 6 hydraulique et sur un actionneur mécanique 7 portés par le plateau 2. Ces segments 3 et 4 sont en outre rappelés l'un vers l'autre par deux ressorts de rappel 8 et 9, et plaqués contre le plateau 2 chacun par un ressort 10, 11.

Une biellette de rattrapage d'usure 12 s'étend le long du cylindre de roue 6 en ayant une première extrémité en appui sur l'âme 3a du premier segment 3 et une seconde extrémité en appui sur l'âme 4a du second segment 4.

Le cylindre de roue 6 est destiné à être actionné lors d'une utilisation du frein à tambour 1 selon un premier mode de fonctionnement dit "simplex", qui assure un freinage progressif particulièrement adapté pour freiner le véhicule en service. Il comprend une chambre hydraulique fermée à ses extrémités par deux pistons qui s'écartent l'un de l'autre lorsque la pression hydraulique augmente et pousse les extrémités associées des segments 3 et 4.

L'actionneur mécanique 7 assure, quant à lui, le freinage de stationnement et de secours en écartant les extrémités associées des segments pour assurer un blocage rapide et puissant des roues du véhicules selon un mode de fonctionnement dit "duo-servo", notamment quand le cylindre de roue 6 est inactif. Cet actionneur est entraîné par un moteur électrique 21 d'axe AY.

En pratique, l'une des difficultés associées à l'utilisation d'un actionneur mécanique réside dans la nécessité de convertir une vitesse rotation élevée associée à un faible couple du moteur électrique, en un faible déplacement avec un effort suffisant. A cet effet, le document FR3016015 enseigne de prévoir un module de réduction qui transmet une rotation du moteur 21, plus précisément une rotation d'un pignon moteur d'axe AY entraîné directement par ce moteur, à l'actionneur mécanique 7. Ce module de réduction est centré sur l'axe AY et comprend plusieurs étages de trains épicycloïdaux d'axe AY afin d'assurer une démultiplication de vitesse efficace entre sa sortie mesurée au niveau d'un pignon de sortie d'axe AY s'accouplant à l'actionneur mécanique 7 et son entrée mesurée au niveau du pignon moteur. En outre, le moteur 21 et le module de réduction sont logés ensemble dans un boîtier cylindrique.

Une telle architecture de motoréducteur, dit de l'association du moteur 21 et du module de réduction impose de disposer l'axe du moteur parallèlement aux axes des trains épicycloïdaux, et l'axe du module de réduction parallèlement aux axes des roues dentées de l'actionneur mécanique 7. L'agencement du moteur par rapport au module de réduction est dont fixée, ainsi que l'orientation du motoréducteur par rapport au plateau du frein à tambour.

Or il est souhaitable de pouvoir réaliser un motoréducteur dont l'architecture permet de s'adapter à différentes configurations d'espace disponible au niveau des roues. En outre, le motoréducteur de l'état de la technique est encombrant.

Le document WO2018148245 divulgue un motoréducteur pour un frein de parking comportant un renvoi d'angle entre le moteur électrique et le réducteur, dont le renvoi d'angle comprend un engrenage à roue conique. Dans le document, un ensemble actionneur électrique comprend un moteur électrique ayant un arbre de sortie, une démultiplication entraînée par l'arbre de sortie, un ensemble de translation linéaire ayant un écrou d'engrenage entraîné par la démultiplication et une partie de liaison de l'ensemble de translation linéaire. L'arbre de sortie entraîne la démultiplication par l'intermédiaire d'un type d'engrenage approprié qui peut convertir un couple de rotation de l'arbre de sortie en démultiplication selon un angle droit.

### EXPOSÉ DE L'INVENTION

C'est par conséquent un but de la présente invention d'offrir un motoréducteur, par exemple pour actionner un frein de parking d'un frein à tambour, pouvant être aisément adapté à différentes configurations au niveau des roues.

Le but énoncé ci-dessus est atteint par un motoréducteur comportant au moins un renvoi d'angle formé par un engrenage à roue plate.

D'une part la mise en oeuvre d'un renvoi d'angle offre une plus grande liberté dans la configuration du motoréducteur et/ou dans son orientation par rapport à l'actionneur mécanique du frein à tambour. D'autre part la mise oeuvre d'un renvoi d'angle à engrenage à roue plate offre une grande latitude dans le choix de l'orientation de l'axe de sortie du moteur par rapport au réducteur.

En outre, au sein de l'engrenage à roue plate, la position d'engrènement des dents du pignon par rapport aux dents de la roue plate peut varier sans modifier le fonctionnement du renvoi d'angle, offrant une liberté supplémentaire dans la configuration du motoréducteur.

Le motoréducteur peut avantageusement présenter un encombrement réduit.

De manière très avantageuse un renvoi d'angle à roue plate connecte le moteur et le réducteur. Par exemple, un pignon est fixé sur l'arbre de sortie du moteur électrique et engrène une roue plate faisant partie du réducteur. Par exemple un pignon est disposé coaxialement à la roue plate et est solidaire en rotation de celle-ci, et entraine une roue dentée du réducteur.

De manière avantageuse, un renvoi d'angle relie la sortie du réducteur et l'actionneur de frein de parking et comporte un engrenage à roue plate.

De préférence le réducteur comporte un train d'engrenages étagés à contact extérieur, chacun comportant un pignon et une roue dentée juxtaposés, dans chaque engrange étagé le pignon et la roue dentée sont coaxiaux, superposés solidaires en rotation, le pignon d'un engrenage engrenant dans la roue dentée d'un engrenage étagé adjacent.

La réalisation d'un tel réducteur offre une liberté supplémentaire dans la configuration du motoréducteur.

La présente invention a alors pour objet un motoréducteur pour actionneur mécanique de frein de parking d'un frein à tambour comportant un moteur électrique et un réducteur, le moteur électrique comportant un arbre de sortie s'étendant selon un premier axe et le réducteur comportant un axe de sortie s'étendant selon un deuxième axe. Le motoréducteur comporte également au moins un renvoi d'angle entre le moteur électrique et le réducteur ou en sortie du réducteur, ledit renvoi d'angle comprenant un engrenage à roue plate.

De manière avantageuse, le renvoi d'angle comporte un pignon et une roue dentée plate, le pignon étant en prise avec l'arbre de sortie du moteur électrique et engrenant la roue dentée plate qui est une partie du réducteur.

La roue dentée plate peut être solidaire en rotation avec un pignon et forme avec lui un engrenage étagé.

Le renvoi d'angle peut comporter un pignon destiné à engrener une roue dentée de l'actionneur mécanique du frein à tambour, le pignon formant une couronne dentée portée par une face d'une roue dentée, la couronne dentée et la roue dentée formant un engrenage étagé.

De manière avantageuse, le motoréducteur comporte un premier renvoi d'angle et un deuxième renvoi d'angle, le premier renvoi d'angle comportant un pignon et une roue dentée plate, le pignon étant en prise avec l'arbre de sortie du moteur électrique et engrenant la roue dentée plate qui est une partie du réducteur, et le deuxième renvoi d'angle comportant un pignon destiné à engrener une roue dentée de l'actionneur mécanique du frein à tambour, le pignon formant une couronne dentée portée par une face d'une roue dentée, la couronne dentée et la roue dentée formant un engrenage étagé.

Par exemple, le réducteur comporte un ou plusieurs engrenages étagés comportant chacun une roue dentée et un pignon, la roue dentée et le pignon étant coaxiaux, par exemple entre quatre et six engrenages étagés.

Avantageusement, les axes des engrenages étagés sont orthogonaux au premier axe du moteur électrique.

Le premier axe et le deuxième axe sont avantageusement sécants.

La présente invention a également pour objet un frein à tambour comportant un tambour, un plateau, deux segments, et un actionneur mécanique fixé sur le plateau en vue d'un freinage de parking et un motoréducteur selon l'invention.

De préférence, les axes des engrenages étagés sont parallèles à l'axe du tambour.

Le réducteur peut comporter un boîtier présentant deux faces planes parallèles s'étendant parallèlement au plateau de frein.

### BRÈVE DESCRIPTION DES DESSINS

La présente invention sera mieux comprise à l'aide de la description qui va suivre et des dessins en annexes sur lesquels :
La figure 1 est une vue en perspective d'un frein à tambour à actionneur de frein de parking électrique selon l'état de la technique.
La figure 2 est une vue en perspective d'un frein à tambour muni d'un motoréducteur selon un exemple de réalisation de la présente invention, le tambour et le couvercle du boîtier du motoréducteur n'étant pas représentés.
La figure 3 est une vue de détail de la figure 2 au niveau du renvoi d'angle en sortie du moteur.
La figure 4 est une vue de côté du renvoi d'angle de la figure 3.
La figure 5 est une vue est une vue en perspective d'un frein à tambour muni d'un motoréducteur selon un autre exemple de réalisation de la présente invention, le tambour et le couvercle du boîtier du motoréducteur n'étant pas représentés.

### EXPOSÉ DÉTAILLÉ DE MODES DE RÉALISATION PARTICULIERS

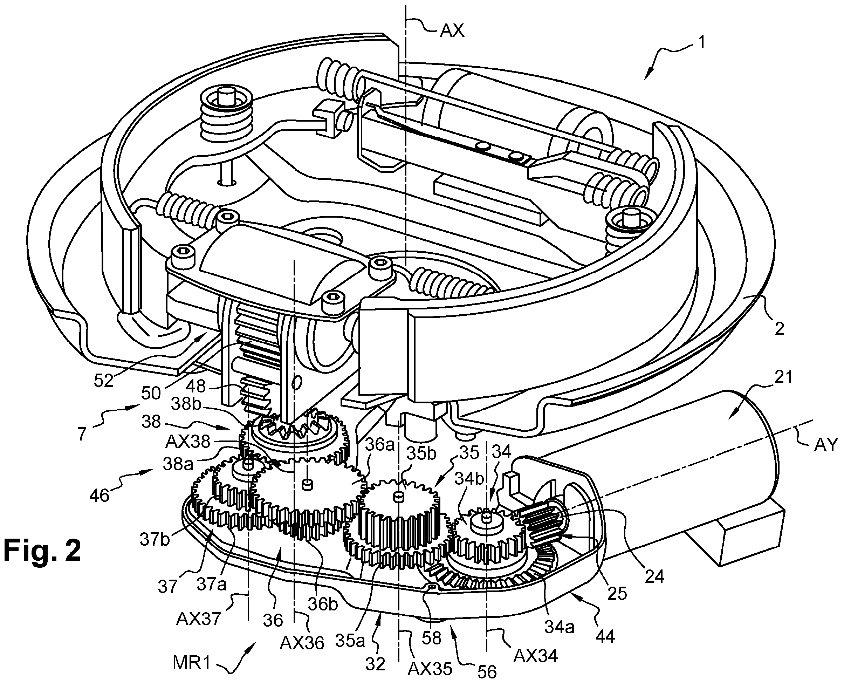

Sur la figure 2, on peut voir une vue en perspective d'un exemple avantageux d'un motoréducteur MR1 selon l'invention associé à un frein à tambour 1 comportant un actionneur 7 de frein de parking électrique.

Le motoréducteur MR1 comporte un moteur électrique 21 et un module de transmission ou réducteur 32.

Dans l'exemple représenté, le moteur électrique 21 et son arbre de sortie 24 s'étendent le long d'axe AY et l'axe de sortie du module de transmission s'étend selon un axe AZ orthogonal aux axes AY et AZ.

Dans cet exemple, le module de transmission est prévu pour s'étendre parallèlement au plateau 2.

Dans l'exemple représenté et de manière avantageuse, la chaîne cinématique du module de transmission se présente sous la forme d'une réduction dite composée dans lequel les éléments d'engrenage se présentent sous la forme d'un train linéaire d'engrenages étagés à contact extérieur, de préférence au nombre de quatre à six. Dans l'exemple de la figure 2, on dénombre cinq engrenages étagés 34, 35, 36, 37 et 38.

Les engrenages 34, 35, 36 et 37 comprennent respectivement un premier étage sous la forme d'une roue dentée 34a, 35a, 36a, 37a et un second étage sous la forme d'un pignon 34b, 35b, 36b, 37b lié rigidement à la roue dentée correspondante avec un diamètre inférieur à celle-ci. L'engrenage 38 comporte une roue dentée 38a et une couronne dentée 38b.

Les engrenages étagés 34, 35, 36, 37 et 38 sont prévus chacun pour être montés à rotation autour d'un axe distinct fixe AX34, AX35, AX36, AX37 et AX38, chacun de ces axes étant parallèles entre eux et disposés dans cet ordre suivant la direction de la réduction, i.e. depuis le pignon moteur jusqu'à l'actionneur mécanique 7. Ils sont notamment dimensionnés de façon à ce que le pignon formant la sortie d'un engrenage engrène dans la roue dentée de l'engrenage suivant, avec la roue dentée 34a formant l'élément d'entrée de la chaîne cinématique, tandis que le pignon 38b forme l'élément de sortie de cette chaîne.

En variante, le module de transmission comporte des pignons et des roues dentées simples ou des pignons et des roues dentées simples et des pignons étagés. Leur nombre et le nombre de dents de chacun sont fixés par la réduction souhaitée.

En outre, le motoréducteur MR1 comporte un premier renvoi d'angle 44 reliant le moteur 21 et le module de transmission 32 et un deuxième renvoi d'angle 46 reliant la sortie du module de transmission et l'actionneur 7.

Le premier renvoi d'angle 44 est avantageusement de type engrenage à roue plate et comporte un pignon 25 et une roue dentée plate 34a, le pignon 25 engrenant dans la roue dentée plate 34a. Le pignon 25 est en prise avec l'arbre de sortie 24 du moteur électrique 21.

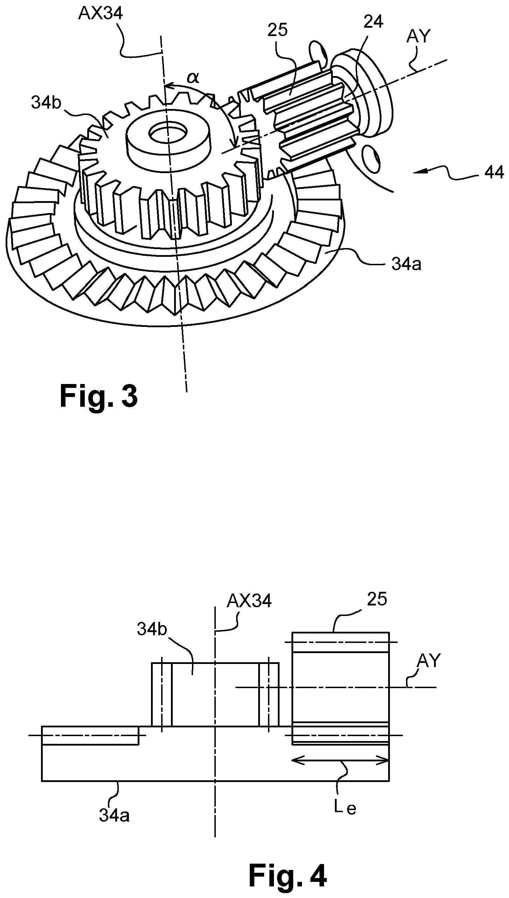

La roue dentée plate 34a comporte une roue dont la denture est formée en couronne sur une face de la roue. Sur la figure 3, on peut voir représenté seul l'engrenage à roue plate.

Le renvoi d'angle à roue plate offre l'avantage d'offrir une liberté dans l'orientation de l'axe du pignon 25 par rapport à l'axe de la roue dentée 34a, i.e. une grande liberté dans le choix de l'angle du renvoi d'angle. En effet l'angle α entre l'axe AX34 et l'axe AY peut varier par exemple de 30° à 135°. Ainsi on dispose d'un grand choix d'orientations entre le moteur et le module de transmission, pour adapter la forme du motoréducteur à celle de l'espace disponible. En outre les contraintes au niveau de la précision de montage sont réduites.

De plus, la position des dents du pignon 25 par rapport aux dents de la roue dente 34a peut varier. Sur la figure 4, la longueur d'engrènement Le correspond à la longueur de la zone d'engagement des dents du pignon avec les dents de la roue dentée 34a. Le pignon 25 peut être disposé par rapport à la roue dentée avec un jeu j. Le jeu j est compris par exemple entre +/- 1/100 mm et +/- 10 mm, avantageusement entre +/- 1/10 mm et +/- 5mm, de manière préférée entre 1 mm et +/- 3 mm et de manière encore plus préférée entre +/-2mm

Cette jeu de montage permis par l'engrenage à roue plate participe à offrir une plus grande liberté dans l'agencement des différents éléments du motoréducteur. Les contraintes de précision de montage sont également davantage relâchées.

De plus un renvoi d'angle comportant un engrenage à roue plate offre une efficacité de l'ordre 97% à 99%. Par comparaison, l'efficacité d'un renvoi d'angle à roue conique est inférieure d'environ 30% de celle d'un renvoi d'angle à roue plate.

Dans l'exemple représenté et de manière avantageuse, le deuxième renvoi d'angle est également à roue plate. La roue dentée 38a qui est entraînée par le pignon 37b, porte sur une de ses faces, la face supérieure dans la représentation de la figure 2, le pignon 38b qui engrène une roue dentée 48 d'un engrenage de transmission 52 qui transmet la rotation du motoréducteur à l'actionneur 7. L'engrenage de transmission comporte des roues 48, 50 à axes parallèles.

Le pignon 38b comporte une couronne dentée. Le pignon 38b et la roue dentée 48 forment l'engrenage à roue plate du deuxième renvoi d'angle de l'actionneur.

Dans l'exemple représenté, l'engrenage de transmission 55 comporte la roue dentée 48 et une roue dentée 52, qui provoque l'écartement de pistons en appui sur des extrémités des segments de frein et écarte ceux-ci en direction du tambour.

Dans une variante différente de l'invention selon la revendication 1, le motoréducteur comporte un renvoi d'angle à roue plate et un renvoi d'angle conique.

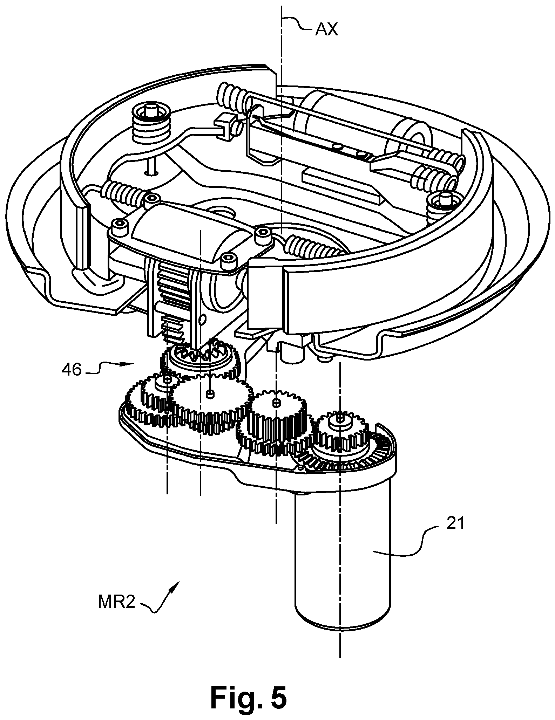

Sur la figure 5, on peut voit un autre exemple de motoréducteurs MR2 selon l'invention comportant un renvoi d'angle 46 uniquement en sortie. Dans cet exemple, l'arbre de sortie du moteur électrique entraîne directement la roue dentée 34a. La réduction de chaque couple roue dentée/pignon engrenées est adaptée afin que la réduction totale soit celle attendue. En effet dans cet exemple un étage de réduction est supprimé par rapport à l'exemple de la figure 2.

Dans un autre exemple non représenté, la roue dentée en sortie engrène directement les dents de roue dentée de l'actionneur. Dans ce cas, les axes des engrenages étagés sont orthogonaux aux axes des engrenages étagés de la figure 2.

De plus, la mise en oeuvre d'un réducteur sous la forme d'un train à engrenages étagées offre également une grande liberté dans la forme que peut prendre le réducteur. En effet, la disposition relative des axes des engrenages étages est libre, seules étant fixées les distances entre les axes assurant un engrènement tangentiel d'un pignon et d'une roue dentée. Par conséquent, le train d'engrenages peut présenter une forme plus ou moins déployée et ainsi s'adapter au mieux à l'environnement disponible autour de la roue. Par exemple, le train d'engrenage peut présenter une forme recourbée ou une forme en S.

Avantageusement, les arbres sont solidaires d'une platine 53 qui est montée dans le fond d'un boîtier 54 logeant le train d'engrenages. Par exemple ils sont réalisés d'un seul tenant avec la platine 53 par moulage ou ils sont en matériau métallique et sont surmoulés dans une platine en matériau plastique.

Le boîtier 54 est avantageusement configuré pour suivre au plus près les contours des engrenages afin de réduire encore l'encombrement du motoréducteur.

Dans l'exemple représenté, le boîtier comporte deux parties, une première partie 54.2 comportant le fond sur lequel repose la platine 53 portant les axes des engrenages étagés et une deuxième partie (non représentée) formant couvercle.

Avantageusement la première et la deuxième partie comportent un fond plan. En variante, le capot suit les contours des engrenages.

La première et la deuxième partie peuvent être symétriques par rapport à un plan passant par la zone de jonction entre la première et la deuxième partie.

Le boîtier est avantageusement réalisé par moulage de matière plastique.

De manière avantageuse, le boîtier 54 comporte des moyens 56 pour fixer le motoréducteur au frein à tambour, plus particulièrement au plateau afin de limiter les déplacements du moteur réducteur qui pourraient l'endommager et/ou générer un bruit indésirable. Par exemple les moyens 56 pour fixer le motoréducteur au plateau comportent des passages de vis 58 traversant le boîtier 54 dans la direction X à l'extérieur des engrenages et dans lesquels sont destinées à être montées des vis coopérant avec des ouvertures correspondantes prévues dans le plateau.

### REFERENCES

1 : frein à tambour
2 : plateau
3 : premier segment
4 : second segment
3a, 4a : âmes
3b, 4b : garnitures de freinage
6 : cylindre de roue hydraulique
7 : actionneur mécanique
8, 9 : ressorts de rappel
10, 11 : ressorts latéraux
12 : biellette de rattrapage d'usure
21 : moteur électrique
24 : arbre de sortie
25 : pignon
32 : réducteur
34 ; 35, 36, 37, 38 : engrenages étagés
34a, 35a, 36a, 37a, 38a : roues dentées
34b, 35b, 3.6b, 37b, 38b : pignons
44 : premier renvoi d'angle
46 : deuxième renvoi d'angle
48 : engrenage de transmission
50, 52 : roues dentées de l'engrenage de transmission
53 : platine
54 : boîtier
54.1 : première partie du boîtier
56 : moyens pour fixer le motoréducteur sur le plateau
58 : passages de vis
AX, AY : axes
AX34, AX35, AX36, AX37, AX38 : axes des engrenages 34 ; 35, 36, 37, 38
Le : longueur d'engrènement
MR1, MR2 : motoréducteur

## Revendications

1. Motoréducteur pour actionneur mécanique (7) de frein de parking d'un frein à tambour comportant un moteur électrique (21) et un réducteur (32), dans lequel le moteur électrique (21) comporte un arbre de sortie (24) s'étendant selon un premier axe, le réducteur (32) comporte un axe de sortie s'étendant selon un deuxième axe dont le motoréducteur comporte également au moins un renvoi d'angle (44) entre le moteur électrique (21) et le réducteur (32), et est **caractérisé en ce que** ledit renvoi d'angle (44) comprend un engrenage à roue plate.

2. Motoréducteur selon la revendication 1, dans lequel le renvoi d'angle (44) comporte un pignon (25) et une roue dentée plate (34a), le pignon (25) étant en prise avec l'arbre de sortie (24) du moteur électrique (21) et engrenant la roue dentée plate (34a) qui est une partie du réducteur (32).

3. Motoréducteur selon la revendication 2, dans lequel la roue dentée plate (34a) est solidaire en rotation avec un pignon (34b) et forme avec lui un engrenage étagé (34).

4. Motoréducteur selon l'une quelconque des revendications précédentes, dans lequel le motoréducteur comporte également au moins un renvoi d'angle (46) en sortie du réducteur (32), ledit renvoi d'angle (46) comprenant un engrenage à roue plate.

5. Motoréducteur selon la revendication 4, dans lequel le renvoi d'angle (46) comporte un pignon (38b) destiné à engrener une roue dentée (48) de l'actionneur mécanique (7) du frein à tambour, le pignon (38b) formant une couronne dentée portée par une face d'une roue dentée, la couronne dentée (38b) et la roue dentée (38a) formant un engrenage étagé.

6. Motoréducteur selon l'une des revendications 1 à 5, dans lequel le réducteur comporte un ou plusieurs engrenages étagés (34, 35, 36, 38, 38) comportant chacun une roue dentée et un pignon, la roue dentée et le pignon étant coaxiaux.

7. Motoréducteur selon la revendication 6, dans lequel les axes des engrenages étagés (34, 35, 36, 38, 38) sont orthogonaux au premier axe du moteur électrique (21).

8. Motoréducteur selon la revendication 6 ou 7, comportant entre quatre à six engrenages étagés.

9. Motoréducteur selon l'une des revendications 1 à 8, dans lequel le premier axe et le deuxième axe sont sécants.

10. Frein à tambour comportant un tambour, un plateau (2), deux segments (3, 4), et un actionneur mécanique (7) fixé sur le plateau (2) en vue d'un freinage de parking et un motoréducteur selon l'une des revendications 1 à 9.

11. Frein à tambour selon la revendication 10, dans lequel les axes des engrenages étagés sont parallèles à l'axe du tambour.

12. Frein à tambour selon la revendication 10 ou 11, dans lequel le réducteur comporte un boitier (54) présentant deux faces planes parallèles s'étendant parallèlement au plateau de frein.

## Patentansprüche

1. Getriebemotor für einen mechanischen Aktuator (7) einer Feststellbreme einer Trommelbremse, umfassend einen Elektromotor (21) und ein Untersetzungsgetriebe (32), wobei der Elektromotor (21) eine Ausgangswelle (24) umfasst, die sich entlang einer ersten Achse erstreckt, wobei das Untersetzungsgetriebe (32) eine Ausgangsachse umfasst, die sich entlang einer zweiten Achse erstreckt, wobei der Getriebemotor auch mindestens einen Winkeltrieb (44) zwischen dem Elektromotor (21) und dem Untersetzungsgetriebe (32) umfasst und **dadurch gekennzeichnet ist, dass** der Winkeltrieb (44) ein Kronenradgetriebe enthält.

2. Getriebemotor nach Anspruch 1, wobei der Winkeltrieb (44) ein Ritzel (25) und ein Kronenrad (34a) umfasst, wobei das Ritzel (25) mit der Ausgangswelle (24) des Elektromotors (21) in Eingriff steht und mit dem Kronenrad (34a) kämmt, das ein Teil des Untersetzungsgetriebes (32) ist.

3. Getriebemotor nach Anspruch 2, wobei das Kronenrad (34a) drehfest mit einem Ritzel (34b) verbunden ist und mit diesem eine Stufenverzahnung (34) bildet.

4. Getriebemotor nach einem der vorhergehenden Ansprüche, wobei der Getriebemotor auch mindestens einen Winkeltrieb (46) am Ausgang des Untersetzungsgetriebes (32) umfasst, wobei der Winkeltrieb (46) ein Kronenradgetriebe enthält.

5. Getriebemotor nach Anspruch 4, wobei der Winkeltrieb (46) ein Ritzel (38b) umfasst, das dazu bestimmt ist, mit einem Zahnrad (48) des mechanischen Aktuators (7) der Trommelbremse zu kämmen, wobei das Ritzel (38b) einen Zahnkranz bildet, der von einer Fläche eines Zahnrads getragen wird, wobei der Zahnkranz (38b) und das Zahnrad (38a) eine Stufenverzahnung bilden.

6. Getriebemotor nach einem der Ansprüche 1 bis 5, wobei das Untersetzungsgetriebe ein oder mehrere Stufenverzahnungen (34, 35, 36, 38, 38) umfasst, die jeweils ein Zahnrad und ein Ritzel umfassen, wobei das Zahnrad und das Ritzel koaxial sind.

7. Getriebemotor nach Anspruch 6, wobei die Achsen der Stufenverzahnungen (34, 35, 36, 38, 38) orthogonal zur ersten Achse des Elektromotors (21) sind.

8. Getriebemotor nach Anspruch 6 oder 7, der zwischen vier bis sechs Stufenverzahnungen umfasst.

9. Getriebemotor nach einem der Ansprüche 1 bis 8, wobei die erste Achse und die zweite Achse einander schneiden.

10. Trommelbremse, die eine Trommel, eine Trägerplatte (2), zwei Backen (3, 4) und einen mechanischen Aktuator (7), der hinsichtlich einer Feststellbremsung an der Trägerplatte (2) befestigt ist, sowie einen Getriebemotor nach einem der Ansprüche 1 bis 9 umfasst.

11. Trommelbremse nach Anspruch 10, wobei die Achsen der Stufenverzahnungen parallel zur Achse der Trommel sind.

12. Trommelbremse nach Anspruch 10 oder 11, wobei das Untersetzungsgetriebe ein Gehäuse (54) umfasst, das zwei parallele ebene Flächen aufweist, die sich parallel zur Bremsplatte erstrecken.

## Claims

1. A geared motor for a mechanical parking brake actuator (7) of a drum brake including an electric motor (21) and a reduction gearbox (32), wherein the electric motor (21) has an output shaft (24) extending along a first axis, the reduction gearbox (32) includes an output axis extending along a second axis, wherein the geared motor also includes at least one angle transmission (44) between the electric motor (21) and the reduction gearbox (32) and is **characterized in that** said angle transmission (44) comprises a crown gear.

2. The geared motor according to claim 1, wherein the angle transmission (44) comprises a pinion (25) and a crown gear (34a), the pinion (25) being engaged with the output shaft (24) of the electric motor (21) and meshing with the crown gear (34a) which is part of the reduction gearbox (32).

3. The geared motor according to claim 2, wherein the crown gear (34a) is rotatably integral with a pinion (34b) and forms a stepped gear (34) therewith.

4. The geared motor according to any one of the preceding claims, wherein the geared motor also comprises at least one angle transmission (46) at an output of the reduction gearbox (32), said angle transmission (46) comprising a crown gear.

5. The geared motor according to claim 4, wherein the angle transmission (46) includes a pinion (38b) for meshing with a toothed wheel (48) of the mechanical actuator (7) of the drum brake, the pinion (38b) forming a ring gear carried by a face of a toothed wheel, the ring gear (38b) and the toothed wheel (38a) forming a stepped gear.

6. The geared motor according to any one of claims 1 to 5, wherein the reduction gearbox includes one or more stepped gears (34, 35, 36, 38, 38) each including a toothed wheel and a pinion, the toothed wheel and the pinion being coaxial.

7. The geared motor according to claim 6, wherein the axes of the stepped gears (34, 35, 36, 38, 38) are orthogonal to the first axis of the electric motor (21).

8. The geared motor according to claim 6 or 7, including four to six stepped gears.

9. The geared motor according to one of claims 1 to 8, wherein the first axis and the second axis are intersecting.

10. A drum brake including a drum, a backing plate (2), two shoes (3, 4), and a mechanical actuator (7) attached to the backing plate (2) for parking braking, and a geared motor according to one of claims 1 to 9.

11. The drum brake according to claim 10, wherein the axes of the stepped gears are parallel to the axis of the drum.

12. The drum brake according to claim 10 or 11, wherein the reduction gearbox includes a housing (54) having two parallel planar faces extending in parallel to the brake backing plate.
